# EUROPEAN PATENT APPLICATION

(11) **EP 3 398 914 A1**
(43) Date of publication of application: **07.11.2018**
(21) Application number: 18382262.6
(22) Date of filing: 19.04.2018
(51) Int. Cl.: C03B 33/07

(54) **MACHINE FOR CUTTING LAMINATED GLASS BY MEANS OF MICROWAVES**

(30) Priority: 05.05.2017 ES 201730665
(71) Applicant: Mor Abad, Francisco, 44003 Teruel (ES)
(72) Inventor: Mor Abad, Francisco, 44003 Teruel (ES)
(74) Representative: González López-Menchero, Álvaro Luis

(57) **Abstract**

A machine for cutting laminated glass that comprises: a first skid (17) equipped with an upper or front cutting tool (3), an upper or front splitting roller (5), a separation blade (8) and several upper or front holding rollers (10); on the on the other hand, on the opposite side, there is a lower or rear skid (18) which is equipped with the lower or rear cutting tool (4), the lower or rear splitting roller (6), and a series of lower or rear holding rollers (11), and also comprising several heating means (7) positioned opposite the cutting line and that consist of a microwave system (12), which may be fixed or movable, positioned above or below. The microwave system saves time, energy, avoids stress on the glass, and can be easily replaced in case of breakage.

## Description

### OBJECT OF THE INVENTION

The object of the present invention, as indicated by the title, is a machine for cutting laminated glass by means of microwaves.

The present invention is characterized in that it uses microwaves as a means to heat and degrade the adhesive medium placed between the sheets of glass, saving time, avoiding stress on the glass, in addition to saving energy and being an easily replaceable medium.

The present invention therefore falls within the scope machines for cutting laminated glass.

### BACKGROUND OF THE INVENTION

Laminated glass consists of the bonding of multiple sheets of glass of any thickness by means of an intermediate film made with polyvinyl butyral (PVB), ethyl-vinyl acetate (EVA) and resins activated by ultraviolet light, or simply by the mixture of their ingredients. It is also called safety glass, although this is only one of the types that exists on the market, and not all types of safety glass (such as tempered glass) are normally laminated.

The process of cutting this type of glass consists of stages of scoring each one of the layers of glass with a series of cutting wheels, splitting the glass with splitting rollers or blades, and lastly heating the intermediate film by means of resistances or similar elements, followed by the breaking of the film with a separation blade.

Although the intended objective of cutting laminated glass is achieved, there are aspects that could be improved, such as the time required, the energy used, the thermal stresses to which the glass is subjected, and the complexity of supplying the heating means that are currently used in case of breakage.

Therefore, the object of this invention is to develop a machine for cutting laminated glass that improves on the aforementioned aspects developing a machine like the one described below, and whose essential characteristics are covered in claim one.

### DESCRIPTION OF THE INVENTION

The object of the present invention is a machine for cutting laminated glass that uses microwaves as the means to heat and degrade the intermediate sheet in laminated glass.

Microwaves are electromagnetic waves, generally between 300 MHz and 30 GHz, with an oscillation period of 3 ns (3×10-9 s) at 33 ps (33×10-12s) and a wavelength in the range of 1 m to 10 mm.

One of the most well-known applications of microwaves is the microwave oven, which uses a magnetron to produce waves at a frequency of approximately 2.45 GHz. These waves cause water molecules to vibrate or rotate, which generates heat. Since most foods contain a significant percentage of water, they can be cooked easily in this way.

No one has proposed the use of microwaves as a means of heating the intermediate film in laminated glass, because of the need for a means of raising the voltage, the danger of the electrical voltages used, and the complexity of the installations.
Several effects are achieved by the use of microwaves as a means of heating the intermediate film in laminated glass.
- On one hand, this saves time, because heating is faster and more effective.
- It also avoids the thermal stress to which the sheets of glass are subjected when heated by resistances or infrared. Said stresses may cause spontaneous breaks.
- An energy savings is also achieved, because all of the energy used in the generation of the microwaves is focused on the intermediate film in the laminated glass.
- Lastly, in comparison with the state of the art, an advantage is also obtained as a result of the ease of supplying and replacing the heating means used, because in the heating systems currently used, the entire piece, which may be several meters long, must be replaced, with the consequent transport cost, in comparison with the use of microwaves, which allows replacement by sections, which may clearly be shorter and consequently more easily replaced and transported.

The use of microwaves as a heating means provides a series of effects that are cumulative or coadjuvant with the nature of the materials used in the laminated glass, such as, for example, that the glass does not undergo any heating at all due to the effect of the microwaves, unless it has some metallic component in its composition; also, the intermediate film, generally made with PVB (polyvinyl butyral), is heated and degrades more effectively than with the heating produced by an electrical resistance or by means of infrared lamps. Microwaves are selective, heating from the inside out.

The microwave system as a heating means may be fixed or moveable, and may also be positioned above or below the cutting line in the case of horizontal cutting machines, or in front of or behind the laminated glass in vertical cutting machines.

Unless otherwise indicated, the meanings of all of the technical and scientific elements used in this description are those normally understood by a normal expert in the technique to which this invention belongs. Procedures and materials that are similar or equivalent to those described in this description may be used in the practical execution of the present invention.

Throughout the description and the claims, the word "comprises" and its variations are not intended to exclude other technical characteristics, additives, components, or steps. For experts on the subject, other objects, advantages, and characteristics of the invention will be drawn partly from the description and partly from the practical embodiment of the invention.

### EXPLANATION OF THE FIGURES

To complement the description that is being provided and in order to provide a better understanding of the characteristics of the invention, in accordance with a preferred practical embodiment of the invention, a set of drawings is included as an integral part of the description, in which the following elements have been represented for the purposes of illustration but not limitation.
Figure 1 shows a representation of a piece of laminated glass on which a first scoring phase is carried out.
Figure 2 shows the piece of glass from the previous figure, which has been scored, and which is now subjected to a splitting process.
In figure 3, the process of heating the aforementioned glass by means of electrical resistances, and later cutting.
Figure 4 shows a horizontal machine for cutting laminated glass that uses electrical resistances or infrared lamps as the heating means.
Figure 5 shows a horizontal machine for cutting laminated glass that uses microwaves as the heating means.
Figure 6 shows a vertical machine for cutting laminated glass that uses electrical resistances or infrared lamps as the heating means.
Figure 7 shows a vertical machine for cutting laminated glass that uses microwaves as the heating means.

### PREFERRED EMBODIMENT OF THE INVENTION

In light of the figures, the following section describes a preferred embodiment of the proposed invention.

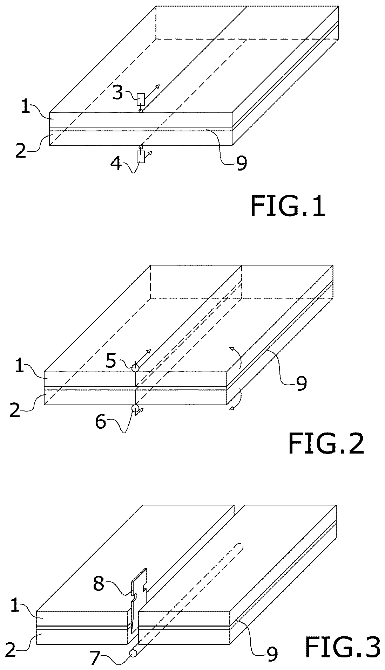

Figure 1 shows the first step that takes place in the process of cutting laminated glass, which consists of the scoring of the upper sheet of glass (1) and the lower sheet of glass (2), each with a cutting tool, which is to say, with an upper cutting tool (3) and a lower cutting tool (4).

After both sheets of glass have been scored, figure 2 shows how the sheets of glass are split by means of several splitting rollers, on other words, by an upper splitting roller (5) and a lower splitting roller (6).

Once both sheets of glass, the upper sheet (1) and the lower sheet (2) have been split, the intermediate sheet (9) must be separated, so several heating means (7) consisting of several electrical resistances or infrared lamps are arranged on the cutting line, to later separate the pieces by means of a separation blade (8).

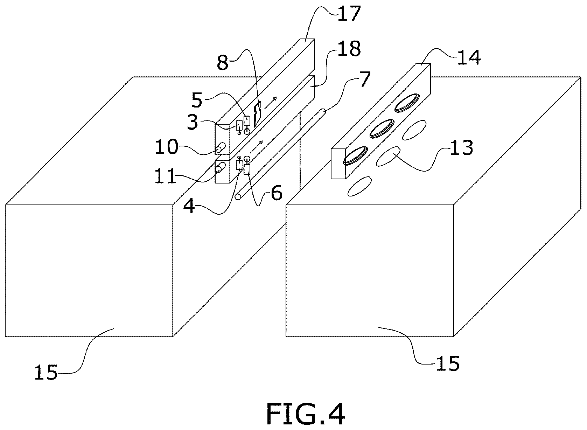

Figure 4 shows a machine from the state of the art that consists of a horizontal cutting machine, in which the laminated glass is placed horizontally on a cutting table (15), showing an upper skid or carriage (17) equipped with the upper cutting tool (3), an upper splitting roller (5), the separation blade (8) and several upper holding rollers (10); on the other hand, on the opposite side, there is a lower skid or lower carriage (18) which is equipped with the lower cutting tool (4), the lower splitting roller (6), and several lower holding rollers (11).

The laminated glass is supported and positioned horizontally on the cutting table (15), held at one end by several first suction cups (13) positioned on a section of the horizontal table (15) and by other second suction cups (16) positioned opposite the first suction cups (13). The upper skids (17) and lower skids (18) are arranged with one above the laminated glass and the other below, moving by means of several guides or carriages.

Along the length of the cut zone, figure 4 shows the positioning of the heating means (7), which, as mentioned before, are responsible for heating and degrading the intermediate film, which is generally made of PVB (polyvinyl butyral), that is placed between sheets of glass by means of radiation.

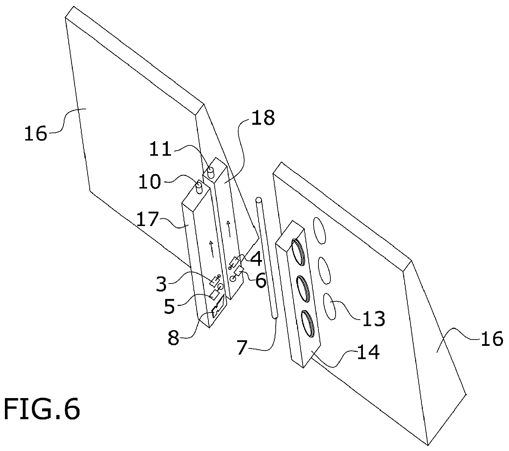

Figure 6 shows a machine, also from the state of the art, but in this case it is a vertical cutting machine in which the laminated glass is positioned vertically on a vertical table (16) and the skids (17) and (18) are positioned on the front and rear sides of the laminated glass, with the heating means (7) on one of the sides and aligned with the cutting line. The description of the elements is the same as the description in figure 4, with the upper elements able to be referred to as front and the lower elements as the rear elements, or vice-versa.

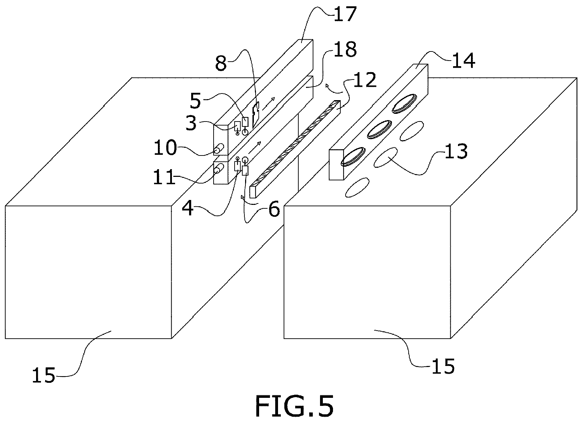

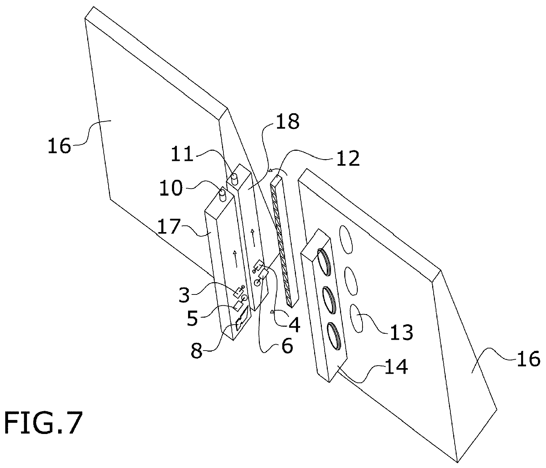

Figures 5 and 7 show two machines, for horizontal and vertical cutting, respectively, in which, in addition to the known means for the scoring and splitting, they include a microwave system (12) as the heating means. In the horizontal cutting machine, the microwave system (12) is positioned horizontally and opposite the cutting line, while in the vertical cutting machine, the microwave system (12) is positioned vertically and opposite the cutting line.

The arrangement and additional functions associated with the microwave system may be any that may occur to a technical expert, from fixed or moveable systems, or with placement on the top or bottom, etc.

Having described the characteristics of the present invention in sufficient detail, as well as how to put it into practice, it should be noted that within its essential characteristics, it may be put into practice in other embodiments that differ in regard to the details indicated to provide an example, and which will likewise fall under the protection granted, provided that its fundamental principle is not altered, changed, or modified.

## Claims

1. A machine for cutting laminated glass **characterized in that** it comprises:
- a first skid (17) equipped with an upper or front cutting tool (3), an upper or front splitting roller (5), a separation blade (8) and several upper or front holding rollers (10);
- on the other hand, on the opposite side, there is a lower or rear skid (18) which is equipped with the lower or rear cutting tool (4), the lower or rear splitting roller (6), and a series of lower or rear holding rollers (11);
- several heating means (7) positioned opposite the cutting line;
**characterized in that** the heating means (7) is a microwave system (12).

2. The machine for cutting laminated glass according to claim 1, **characterized in that** the microwave system (12) is a fixed system.

3. The machine for cutting laminated glass according to claim 1 or 2, **characterized in that** the microwave system (12) is positioned above or in front of the laminated glass.

4. The machine for cutting laminated glass according to claim 1 or 2, **characterized in that** the microwave system (12) is positioned below or behind the laminated glass.

5. The machine for cutting laminated glass according to claim 1, **characterized in that** the microwave system (12) is a movable system.

6. The machine for cutting laminated glass according to claim 1 or 5, **characterized in that** the microwave system (12) is positioned above or in front of the laminated glass.

7. The machine for cutting laminated glass according to claim 1 or 5, **characterized in that** the microwave system (12) is positioned below or behind the laminated glass.
